Europäisches Patentamt

(19) European Patent Office

Office européen des brevets

(11) Publication number: **0 292 627**
**A1**

## (12) EUROPEAN PATENT APPLICATION

(21) Application number: **87306378.8**

(22) Date of filing: **17.07.87**

(51) Int. Cl.⁴: **C08J 9/10 , C08K 3/26 , C04B 26/04 , E04C 2/20 , //(C04B26/04,14:28,24:12)**

(30) Priority: **27.05.87 JP 130445/87**

(43) Date of publication of application: **30.11.88 Bulletin 88/48**

(84) Designated Contracting States: **DE FR GB IT**

(71) Applicant: **Mori, Shoji**
**1-33, Higashikohama 2-chome Sumiyoshi-ku Osaka(JP)**

(72) Inventor: **Mori, Shoji**
**1-33, Higashikohama 2-chome Sumiyoshi-ku Osaka(JP)**

(74) Representative: **Beresford, Keith Denis Lewis et al**
**BERESFORD & Co. 2-5 Warwick Court High Holborn**
**London WC1R 5DJ(GB)**

(54) **Building blocks.**

(57) Building blocks made from a resinous composition comprising: ethylene vinylacetate resin consisting of 72 to 95 wt. % of ethylene and 28 to 5 wt % of vinylacetate and balancing excipients wherein the copolymer resin shares in the whole composition for 63 to 72 wt. % and the excipients are comprised of foaming agent, azodicarbonamide as main agent sharing 2 to 3 wt. % and of cross-linker, dicumyl peroxide as main linker sharing 0.8 to 1 wt. % and of filler, calcium carbonate sharing 24 to 34.2 wt. % and some amount of coloring material so that the total balance therebetween may be established.

EP 0 292 627 A1

## BUILDING BLOCKS

### Field of the Invention

This invention relates to plastic blocks for building fabrications, of which main resinous component is ethylene vinylacetate copolymer.

### Description of the Prior Art

Conventionally wood has been used as material for building blocks and also known are wooden blocks covered surfacially with a kind of plastic, vinylchloride resin, or blocks made from foamed polystyrene resin.

However, conventional wood blocks tend of themselves to yield wooden fine splits or cracks on their surfaces during use for long time, which leads to cause problems in durability and safety. And vinylchloride resin-covered wooden blocks are inferior in durability, namely, coverages at corners are especially liable to delamination trend. Further, foamed styrene blocks are generally too light in weight to be manually handled and also inferior in durability, namely, their corner positions are so easy to be chipped or cut away as to make a problem in durability.

Then, as one of important requirements for the building bolcks, contact maintenance or frictional resistance between piled blocks may be recited and this property is concerned with frictional coefficient between two surfaces to be put in contact, wherein conventional wood blocks give an acceptable or suitable frictional value, but its defects are already noted above.

### Summary of the Invention

This invention is reached to dispense with the defects as noted above residing at conventional building blocks and is intended to offer building blocks which are superior in durability, safety and rich with resilience, contact maintenance in the case of being piled and also excellent in rendering weighty feeling.

As will be clear in the following descriptions, this invention includes · three preferred embodiments. The first one is about building blocks made from a resinous composition comprising: ethylene vinylacetate resin consisting of 72 to 95 wt. ( wt. stands for weight) % of ethylene and 28 to 5 wt % of vinylacetate as main resinous component ( hereinafter this resin is noted as the copolymer resin ) and excipients or non-resinous materials, wherein the copolymer resin shares in the whole composition for 63 to 72 wt. % and the balancing excipients are comprised of foaming agent, azodicarbonamide as main agent sharing 2 to 3 wt. % and of cross-linker, dicumyl peroxide as main linker sharing 0.8 to 1 wt. % and of filler, calcium carbonate ( hereinlater, abbreviated as Ca filler ) sharing 24 to 34.2 wt. % and some amount of coloring material so that the total balance therebetween may be established. The second invention is about building blocks in form of slab, which is made from a resinous composition comprising: ethylene vinylacetate resin consisting of 72 to 95 wt. % of ethylene and 28 to 5 wt % of vinylacetate as main resinous component ( hereinafter this resin is noted as the copolymer resin ) and excipients or non-resinous materials, wherein the copolymer resin shares in the whole composition for 63 to 72 wt. % and the balancing excipients are comprised of foaming agent, azodicarbonamide as main agent sharing 2 to 3 wt. % and of cross-linker, dicumyl peroxide as main linker sharing 0.8 to 1 wt. % and of filler, calcium carbonate ( hereinlater, abbreviated as Ca filler ) sharing 24 to 34.2 wt. % and some amount of coloring material so that the total balance therebetween may be established, and wherein the copolymer resin and the excipients or all necessary materials are subjected to mixing by kneading and thereafter to heating in a foaming batch at about 180 to 220 °c for 20 to 30 min. to foam formation and thereafter a foamed body thus prepared is allowed to stand for several days for stabilization and is cut off of its some surfacial portions to discard and then is sliced into panel slabs having a desired thickness.

The third invention is about building blocks in form of slab after plying slabs once sliced, which is made from a resinous composition comprising: ethylene vinylacetate resin consisting of 72 to 95 wt. % of ethylene and 28 to 5 wt % of vinylacetate as main resinous component ( hereinafter this resin is noted as the copolymer resin ) and excipients or non-resinous materials, wherein the copolymer resin shares in the whole composition for 63 to 72 wt. % and the balancing excipients are comprised of foaming agent, azodicarbonamide as main agent sharing 2 to 3 wt. % and of cross-linker, dicumyl peroxide as main linker sharing 0.8 to 1 wt.% and of filler, calcium carbonate ( hereinlater, abbreviated as Ca filler ) sharing 24 to 34.2 wt. % and some amount of coloring material so that the total balance therebetween may be established, and wherein the copolymer resin and the excipients or all necessary materials are subjected to mixing by kneading and thereafter to heating in a foaming batch at about 180 to 220°c for 20 to 30 min. to foam formation and thereafter a foamed body thus prepared is allowed to stand for several days for stabilization and is cut off of some surfacial portions to discard and then sliced into panel slabs having a desired thickness, which are whence plied or press-adhered after applying an adhesive and the ply slabs or blocks are sliced into slabs having desired dimension.

Description of the Preferred Embodiment(s)

In the following, a preferred example embodying the inventive blocks for building will be described.

The materials are in the whole comprised of ethylene vinylacetate resin consisting of 72 to 95 wt. % of ethylene and 28 to 5 wt % of vinylacetate and non-resinous excipients as noted above. The excipients are broken down into foaming agent, cross-linker, inorganic filler of Ca filler and some amount of coloring material, as also noted above.

A specific composition is illustrated comprising: the copolymer resin of 63 to 72 wt. %; a foaming agent, azodicarbon amide as main agent, of 2 to 3 wt. %; a cross-linker, dicumyl peroxide as main linker, of 0.8 to 1 wt. %; Ca filler (inorganic filler) and some amount of a coloring material.

The best composition found in this invention comprises: the copolymer resin consisting of 92 wt. % of ethylene and 8 wt. % of vinylacetate sharing 70 wt. %; 2.6 wt. % of azodicarbon amide; 0.9 wt. % of dicumyl peroxide; 25 wt. % of Ca filler and the balancing coloring material.

Inclusion of Ca filler comes from the desire of increasing a density so that Ca filler-filled blocks will give weighty or dependable feeling to users. Unfilled ones were inferior in simulation to wood. But excess in the filling causes increase of a permanent compressive strain, wherein this is defined by a remnant unrecovery % after compressing a test sample for 25% of its original thickness, for instance, an original thickness of 100 mm was compressed to be 75 mm and if it has left 2 mm of remnant depression, the permanent compressive strain is 2 %. Such trend is not suited to wood-simulated building blocks. Further excess of Ca filler causes lowering of frictional resistance so that piled blocks may unsuitably loose frictional resistance. Experimentally the preferred range was determined as noted above.

As for compositive ratio of ethylene and vinylacetate, the range as noted above is found to be well serviceable. For instance, vinylacetate content of 40% makes the copolymer resin so elastic or a rubber like material, unsuitable to building blocks. Such a material is difficult to be cut by a band saw. In contrast, vinylacetate content of less 5% makes the subsequent adhesion job difficult, or failure in adhesion. Applicability of band saw is, in view of today's workshop, necessary requirement for building blocks, because manufacture of foamed bodies from the materials like in this invention is still difficult by means of a press machine, wherein uniform heating of foaming materials with use of a press machine is not practicable in view of today's press system. These experiences have decided the ethylene and vinylacetate range as noted before.

Reference is made to process of manufacturing the foamed bodies. The resinous materials and excipients, all necessary materials are charged into a mixer and kneaded, and then put to roller kneading as in conventional manner. Then well kneaded materials are charged into a conventional foaming kiln and heated up to about 180 to 220°c for 20 to 30 min, during which period foaming takes place. Then foamed, solidified body is removed and put to cooling by a fan, and allowed to stand for a convenient period, for instance, 3 to 5 days. Thereafter, the body is cut off of upper and under portions to discard and sliced into slabs having a thickness, for instance, 40 mm by a band saw.

In the case that sliced slabs are in short of thickness for use as building blocks, additional steps as noted below will serve to add the thickness. That is, a plurality of slabs are press-adhered to make a desired thickness after applying an adhesive, for instance, a rubber based glue comprising chloroprene and phenol resin, wherein recommended conditions are, after applying the adhesive on surfaces, to allow stand at about 70°c for about 5 to 25 min. and to press them with 1.3 to 2.5 kg/cm$^2$ for 3 to 5 min. In the case of ply slabs, use of a special band saw is required to cutting job. If a column shape is intended to finish, a foamed body is finished to be round by a lathe having a whetstone as bite.

The wood simulated foamed block thus obtained has a density of about 0.18 g/cm$^3$, which is larger than that of conventional polystyrene-based foamed body having a density of about 0.03 g/cm$^3$ and the inventive foamed body has the tensile strength of about 19.4 kg/cm$^2$, the breaking elengation of about 207 %, the compressive hardness of 2.3 kg/cm$^2$, and these values deserve to be desrirably large, wherein a large value in the compressive hardness means less deformation against external force, in other words, more suitable to wood simulation. The inventive body has the wet absorption of about 0.18 %, considerably low, which means quick dry after water wash, favorable to a wood simulation. As for permanent strain by 25% compression, the inventive body has 2.07 %, considerably low. Foaming magnification in the above example is about 5 times on volume basis, which is considerably less than 20 to 30 times with foamed polystyrene.

In addition to the reference above, the inventive foamed body is rich with resilience, contact maintenance, safety, resistance to color fastness, and weighty feeling, which will permit formation of stable pile, not only normal pile, but also slant pile. The inventive body has uniform internal structure, which contributes to its sturdiness, insensitivity to moist, whereby dirts will be easily washed off, and to dispense with conventional problems with wood such as yielding of fine splits and cracks.

The blocks for building in this disclosure mean not only blocks for use in play or game, but also for use in field buildings, for instance, blocked wall, blocked gate, including applications in building works. Therefore, the inventive blocks will serve in place of blocks made from wood, soil, steel, cloth, paper, other plastics and will be applied to wide sectors covering from playthings in room to playtools in field, for instance, float in swimming training.

## Claims

1. A building block made from a resinous composition comprising: ethylene vinylacetate resin consisting of 72 to 95 wt. % of ethylene and 28 to 5 wt % of vinylacetate and excipients; wherein the copolymer resin shares in the whole composition for 63 to 72 wt. % and the balancing excipients are comprised of foaming agent, azodicarbonamide as main agent sharing 2 to 3 wt. % and of cross-linker, dicumyl peroxide as main linker sharing 0.8 to 1 wt. % and of filler, calcium carbonate sharing 24 to 34.2 wt. % and some amount of coloring material so that the total balance therebetween may be established.

2. A building block in form of slab, which is made from a resinous composition comprising: ethylene vinylacetate resin consisting of 72 to 95 wt. % of ethylene and 28 to 5 wt % of vinylacetate and balacing excipients; wherein the copolymer resin shares in the whole composition for 63 to 72 wt. % and the excipients are comprised of foaming agent, azodicarbonamide as main agent sharing 2 to 3 wt. % and of cross-linker, dicumyl peroxide as main linker sharing 0.8 to 1 wt. % and of filler, calcium carbonate sharing 24 to 34.2 wt. % and some amount of coloring material so that the total balance therebetween may be established;
and wherein the copolymer resin and the excipients or all necessary materials are subjected to mixing by kneading and thereafter to heating in a foaming batch at about 180 to 220° c for 20 to 30 min. to foam formation and thereafter a foamed body thus prepared is allowed to stand for several days for stabilization and is cut off of its some surfacial portions to discard and then is sliced into panel slabs having a desired thickness.

3. A building block in form of ply slab after plying slabs once sliced, which is made from a resinous composition comprising: ethylene vinylacetate resin consisting of 72 to 95 wt. % of ethylene and 28 to 5 wt % of vinylacetate and balancing excipients; wherein the copolymer resin shares in the whole composition for 63 to 72 wt. % and the excipients are comprised of foaming agent, azodicarbonamide as main agent sharing 2 to 3 wt. % and of cross-linker, dicumyl peroxide as main linker sharing 0.8 to 1 wt. % and of filler, calcium carbonate sharing 24 to 34.2 wt. % and some amount of coloring material so that the total balance therebetween may be established,
and wherein the copolymer resin and the excipients or all necessary materials are subjected to mixing by kneading and thereafter to heating in a foaming batch at about 180 to 220° c for 20 to 30 min. to foam formation and thereafter a foamed body thus prepared is allowed to stand for several days for stabilization and is cut off of its some surfacial portions to discard and then is sliced into panel slabs having a desired thickness; and wherein slabs once sliced are plied after applying an adhesive and the ply slabs are again sliced into slabs.

4. A foamed body made from a resinous composition comprising; 63 to 72 wt % of a copolymer of ethylene and vinyl acetate comprising of 72 to 95 wt % of ethylene, and 28 to 5 wt % of vinyl acetate;
24 to 34.2 wt % of a filler;
2 to 3 wt % of a foaming agent; and
0.8 to 1 wt % of a cross-linker.

5. A foamed body according to claim 4, wherein the filler is calcium carbonate.

6. A foamed body according to claim 4 or 5, wherein the foaming agent comprises azodicarbonamide.

7. A foamed body according to claim 4, 5 or 6, wherein the cross-linker comprises dicumyl peroxide.

8. A foamed body according to any of claims 4 to 7, which also comprises a colorant.

9. A foamed body according to any of claims 4 to 8, in the form of a building block.

10. A building block comprising adhesively laminated laminae cut from a foamed body according to any of claims 4 to 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 83, 1975, page 76, abstract no. 80648u, Columbus, Ohio, US; & JP-A-75 39 364 (MITSUBISHI PETROCHEMICAL CO., LTD) 11-04-1975 * Abstract * | 1,2,4-7 | C 08 J 9/10<br>C 08 K 3/26<br>C 04 B 26/04<br>E 04 C 2/20 //<br>(C 04 B 26/04<br>C 04 B 14:28<br>C 04 B 24:12 ) |
| Y | Idem --- | 3,10 | |
| Y | DE-A-3 223 246 (ÖSTERREICHISCHE HERAKLITH) * Figure 1 * --- | 3,10 | |
| X | AU-A- 423 404 (FURUKAWA ELECTRIC CO.) * Page 10, lines 7-10; page 13, lines 5-9; page 17, lines 11-17; claims 1,2,5,6,8,10,21 * --- | 1,4-9 | |
| A | GB-A-1 399 587 (IDEMITSU KOSAN CO.) * Page 1, lines 14-19,87-96; claims 1-3 * --- | 1,4-7 | |
| A | US-A-2 297 204 (W. DEISSNER) * Page 2, left-hand column, line 14 - right-hand column, line 5 * ----- | 2,3 | **TECHNICAL FIELDS SEARCHED (Int. Cl.4)**<br><br>C 08 J 9/00<br>C 04 B 26/00<br>C 08 K 3/00<br>E 04 C 2/00<br>B 44 F 9/00<br>B 29 C 69/00 |

The present search report has been drawn up for all claims

| Place of search | Date of completion of the search | Examiner |
|---|---|---|
| THE HAGUE | 23-03-1988 | DAELEMAN P.C.A. |